# EUROPÄISCHE PATENTSCHRIFT

(11) **EP 2 551 605 B1**
(45) Veröffentlichungstag und Bekanntmachung des Hinweises auf die Patenterteilung: **30.03.2016**
(21) Anmeldenummer: 11006273.4
(22) Anmeldetag: 29.07.2011
(51) Int. Cl.: A47J 27/21, F24H 1/18, F24H 1/20, F24D 19/00, F24H 9/20

(54) **Heisswassergerät und Verfahren zum Betreiben eines Heisswassergeräts**
Hot water device and method for operating a hot water device
Chauffe-eau et procédé de fonctionnement d'un chauffe-eau

(43) Veröffentlichungstag der Anmeldung: 30.01.2013
(73) Patentinhaber: Stiebel Eltron GmbH & Co. KG, 37603 Holzminden (DE)
(72) Erfinder: Hoffmann, Fred, 37601 Holzminden (DE)

(56) Entgegenhaltungen:
- DE-A1- 19 510 733
- DE-A1-102005 062 660
- DE-C1- 3 836 877
- GB-A- 2 215 018
- US-A- 6 094 524

## Beschreibung

Die vorliegende Erfindung betrifft ein Heißwassergerät.

Heißwassergeräte, mit denen Wasser mit einer Temperatur von bis zu 85°C bereitgestellt wird, sind aus dem Stand der Technik bekannt und werden in Büros, Haushalten und Kleingewerben eingesetzt. Ebenso sind Kochendwassergeräte, wie beispielsweise Wasserkocher, bekannt, die tatsächlich kochendes Wasser mit einer Temperatur von ca. 100°C liefern.

Aus der GB 2 215 018 A geht ein Wassererhitzer mit einem Flüssigkeitsbehälter, einer Heizeinrichtung zur Erwärmung von sich in dem Behälter befindlichen Wasser, einem Einlass und einem Auslass hervor. Der Wassererhitzer weist eine Versorgungsleitung auf, die den Einlass mit einer Flüssigkeitszufuhr verbindet, und eine Vorrichtung zum Zumischen von Gas innerhalb der Versorgungsleitung. Zudem ist ein Gasabscheider vorgesehen und eine Ausdehnungskammer innerhalb des Behälters, in die sich das erhitzte Wasser ausdehnen kann. Die Ausdehnungskammer wird über den Auslass entlüftet.

Die DE 10 2005 062 660 A1 zeigt einen Warmwasserbereiter, der einen Grundbehälter zur Aufnahme von Wasser aufweist. Der Grundbehälter weist einen Zulauf für zu erwärmendes Wasser und einen Ablauf für erwärmtes Wasser auf. Weiterhin weist der Grundbehälter eine nach außen offene Aufnahmekammer zur austauschbaren Aufnahme von Systemkomponenten auf. Die DE 102 005 062 660 A1 offenbart der Oberbegriff des Anspruchs 1.

Die US 6,094,524 beschreibt ein Heißwasserversorgungssystem mit einem Tank und einer belüfteten Aufnahmekammer. Weiterhin ist eine Saugvorrichtung vorgesehen, die Wasser aus der Ausdehnungskammer entfernt und einer Heißwasserkammer zuführt.

Es ist eine Aufgabe der vorliegenden Erfindung, ein kostengünstiges Heißwassergerät vorzusehen, welches einen komfortablen Einsatz und eine energiesparende Betriebsweise ermöglicht.

Diese Aufgabe wird durch ein Heißwassergerät gemäß Anspruch 1 und ein Verfahren zum Betreiben eines Heißwassergerätes gemäß Anspruch 10 gelöst.

Das Heißwassergerät weist einen Speicherbehälter mit einem Kaltwassereinlauf und einem Heißwasserauslauf und einen Aufnahmeraum für Ausdehnungswasser aus. Der Heißwasserauslauf ist offen, insbesondere ventilfrei, ausgestaltet zur Beaufschlagung von Heißwasser mit einem atmosphärischen Luftdruck für eine Bereitstellung von nahezu kochendem Heißwasser mit einer Temperatur von mindestens ca. 95°C.

Erfindungsgemäß liegt am Heißwasserauslauf ein atmosphärischer Druck an, nicht jedoch ein Fließdruck, vorzugsweise zumindest dann, wenn der Kaltwassereinlauf geschlossen ist.

Mit dem Heißwassergerät wird nahezu kochendes Wasser bereit gestellt, was bedeutet, dass das Wasser eine Temperatur zwischen ca. 95°C und einer Kochpunkttemperatur aufweist. Insbesondere weist das Wasser eine Temperatur von ca. 96°C, 97°C, 98°C oder 99°C auf. Gemäß einem vorteilhaften Ausführungsbeispiel ist die Temperatur abhängig vom atmosphärischen Druck.

Erfindungsgemäß weist das Heißwassergerät in einem Einlauf des Speicherbehälters eine Saugeinheit auf. Diese Saugeinheit dient dazu, den Aufnahmeraum während des Zapfens zu entleeren. Das abgesaugte Wasser wird dem Speicher wieder zugeführt.

Die Saugeinheit weist eine Venturidüse und einen parallel dazu ausgestalteten Bypass auf.

Erfindungsgemäß ist der Querschnitt des Bypasses kleiner als der Querschnitt einer Treibdüse der Venturidüse.

Vorzugsweise weist das Heißwassergerät eine Membraneinheit mit einer Membran auf. Diese Membraneinheit schafft vorzugsweise einen Druckausgleich.

Vorzugsweise bildet die Membran einen Teil einer Behälterwand des Heißwassergerätes. Dieser Teil der Behälterwand ist folglich flexibel und verändert sich bei geringen Drücken. Bereits bei einer geringen Wasserhöhe oberhalb eines Wasseranschlussstutzens verformt sich die Membran so, dass sie Raum im Behälter freigibt. Insbesondere drückt sich die Membran zusammen. Vorzugsweise ist die Membran wie ein Schlauch ausgeformt.

Bei einem Zapfvorgang wird an der Membran eine Druckverminderung erzeugt, durch eine im Bereich des strömenden Wassers angeordnete Venturidüse. Dabei wird aus der Umgebung der Membran Wasser abgesaugt. Dadurch dehnt sich die Membran aus. Bei Beendigung des Zapfvorgangs wird die Membran durch den statischen Druck der über der Membran stehenden Wassersäule wieder zusammen gedrückt, mithilfe der Saugeinheit wird das Wasser in den Speicherbehälter zurück gesogen und die Membran dehnt sich sodann wieder aus.

Vorzugsweise weist der Speicherbehälter zwei Behälterhälften auf, und vorzugsweise ist ein Stützring im Übergangsbereich zwischen der ersten und der zweiten Behälterhälfte vorgesehen.

Wenn das Wasser innerhalb des Speicherbehälters auf eine Temperatur von mindestens ca. 95°C aufgewärmt wird, so dass es nahezu kocht, wird sich der Behälter ebenfalls ausdehnen und kann die Ausdehnungen auf eine Wärmedämmung weitergeben. Dies kann jedoch zu einer Beschädigung der Wärmedämmung führen. Zur Vermeidung der Beschädigung der Wärmedämmung wird also der Stützring verwendet. Da der Stützring über eine höhere Festigkeit als das Material des Speicherbehälters verfügt, kann der Stützring beispielsweise einen mit Glasfaser dotierten Kunststoff wie beispielsweise Polyamid darstellen. Alternativ dazu kann auch ein Metallring verwendet werden.

Vorzugsweise ist das Heißwassergerät als ein Untertischgerät ausgestaltet.

Die Erfindung betrifft weiterhin den Gedanken, ein Heißwassergerät vorzusehen, welches einen Heißwasserspeicher und einen Speicherauslauf aufweist, wobei der Speicherauslauf ventilfrei ausgestaltet ist, so dass Wasser, welches sich im Speicherauslauf und/oder in der Armatur des Heißwassergerätes befindet, nach einem Zapfvorgang wieder zurück in den Heißwasserspeicher fließen kann. Dies ist insbesondere vorteilhaft, weil somit vermieden werden kann, dass sich in dem Speicherauslauf und/oder in der Armatur Wasser befindet, welches nicht die gewünschte Temperatur aufweist. Mit dem erfindungsgemäßen Heißwassergerät kann somit direkt Wasser mit der gewünschten Temperatur gezapft werden. Hierdurch kann Energie eingespart werden, da nicht erst kühleres Wasser ungenutzt abfließen muss, bevor Wasser mit der gewünschten Temperatur bereit steht.

Vorzugsweise ist im Kaltwassereinlauf, insbesondere einer Armatur, ein Kaltwasserventil angeordnet.

Die Erfindung betrifft weiterhin den Gedanken, dass durch Öffnen des Kaltwasserventils Kaltwasser in den Behälter strömt, wodurch nahezu kochendes Wasser aus dem Speicherbehälter gedrückt wird.

Hierbei wird das Wasser mittels eines Heizkörpers erhitzt. Wasser wird dadurch gezapft, dass das Kaltwasserventil geöffnet wird. Dadurch strömt Kaltwasser in den Behälter und vorzugsweise nahezu kochendes Heißwasser wird herausgedrückt. Über einen Temperaturregler wird der Heizkörper eingeschaltet und das sich im Behälter befindliche Wasser soweit erhitzt, bis es nahezu kocht. Vorzugsweise dehnt sich das Wasser hierbei aus, wodurch die Membran zusammen gedrückt wird.

Vorzugsweise ist das Heißwassergerät drucklos ausgestaltet. Dies bedeutet, dass der Kaltwassereinlauf mit Hilfe des Kaltwasserventils bereits vor dem Wassereintritt in das Gerät abgestellt werden kann, da sich das Kaltwasserventil vorzugsweise außerhalb des Geräts befindet. Der Heißwasserauslauf ist offen. Damit steht das Heißwassergerät bei Nichtbenutzung nicht unter dem Fließdruck, sondern unter Atmosphärendruck. Das erfindungsgemäße Heißwassergerät kann einen offenen Warmwasserspeicher aufweisen. Der Warmwasserspeicher kann ein Ausgleichsgefäß mit einer Membran aufweisen, um unterschiedliche Füllzustände und unterschiedliche Ausdehnungen des sich in dem Speicher befindlichen Heißwassers ausgleichen zu können.

Der Wasserspeicher des Heißwassergerätes weist vorzugsweise ein Volumen zwischen 1l und 51, inbesondere von 1,5l bis 3l auf.

Vorzugsweise ist am Heißwassergerät eine Armatur vorgesehen. Die Armatur weist ein Kaltwasserventil zur Bereitstellung von nahezu kochendem Wasser durch Öffnen des Kaltwasserventils auf. Die Armatur weist außerdem einen Kaltwasserzulauf, einen Kaltwasserauslauf und einen Heißwasserabgang auf. Durch Öffnen des Kaltwasserventils strömt Kaltwasser durch den Kaltwassereinlauf der Armatur über den Kaltwasserauslauf der Armatur in den Behälter des Heißwassergeräts. Dadurch wird Heißwasser aus dem Heißwasserabgang der Armatur herausgedrückt.

Vorzugsweise ist ein Auslaufpunkt für das nahezu kochende Wasser am höchsten Punkt der Armatur angeordnet. Insbesondere weist die Armatur im Bereich des Heißwasserauslaufs keinen Bogen bzw. keine Abwinkelung nach unten auf. Hierdurch soll das sich in der Armatur befindliche Wasser, das nicht benötigt wird, vollständig zurück gesaugt werden.

Vorzugsweise liegt an dem Behälter ein Fließdruck und an der Armatur ein Netzdruck an.

In einer weiteren Ausgestaltung der Erfindung ist die Armatur so ausgestaltet, dass dem auslaufenden nahezu kochenden Wasser Kaltwasser beimischbar ist.

Gemäß einer weiteren Ausgestaltung der Erfindung ist eine Kalkschutzkartusche vorgesehen, die im unteren Bereich des Speicherbehälters angeordnet ist, wobei die Kalkschutzkartusche einen Behälter zur Aufnahme von Katalysatorgranulat und einen entsprechenden Deckel aufweist, wobei der Behälter und der Deckel jeweils als Sieb ausgestaltet sind. Das Sieb weist dabei eine Schlitzbreite von vorzugsweise 0,3 mm auf. Das Volumen der Kalkschutzkartusche beträgt vorzugsweise 200 ml.

Die mit Katalysatorgranulat gefüllte Kalkschutzkartusche wird vorzugsweise auf dem Boden des Speicherbehälters konzentrisch zu einem Heizkörper angeordnet. Der Behälter und der Deckel der Kalkschutzkartusche können verschweißt werden. Durch die Ausgestaltung der Kartusche als Sieb wird das Granulat vom einströmenden Kaltwasser und von der Konvektionsströmung während des Aufheizens umspült.

Weiterhin betrifft die Erfindung ein Heißwassergerät mit einem Speicherbehälter, wobei der Speicherbehälter zwei Behälterhälften aufweist. Das Heißwassergerät weist weiterhin einen Stützring auf, der im Übergangsbereich zwischen der ersten und der zweiten Behälterhälfte vorgesehen ist.

In einem Verfahren zum Betreiben eines Heißwassergerats mit einem Speicherbehalter mit einem Kaltwassereinlauf und einem Heißwasserauslauf kann Ausdehnungswasser beim Aufheizen des Heißwassergeräts in einem Aufnameraum fließen. Dabei wird das Heißwasser bei einem atmosphärischen Luftdruck auf eine Temperatur von mindestens ca. 95°C erhitzt, bei der es nahezu kocht. Das nahezu kochende Wasser wird durch einen offenen, insbesondere ventilfreien Auslauf dadurch geliefert, dass ein Kaltwasserventil geöffnet wird, wodurch das Heißwasser aus dem Speicherbehälter strömt, so dass durch Öffnen des Kaltwasserventils nahezu kochendes Wasser bereitgestellt wird.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung eines Heißwassergerätes gemäß einem ersten Ausführungsbeispiel,
- Fig. 2: zeigt eine schematische Schnittansicht einer Venturidüse in einem Heißwassergerät,
- Fig. 3: zeigt eine perspektivische Ansicht auf die Venturidüse von Fig. 2.
- Fig. 4: zeigt eine perspektivische Ansicht einer Venturidüse und
- Fig. 5: zeigt eine perspektivische Ansicht eines Speicherbehälters für ein Heißwassergerät gemäß einem zweiten Ausführungsbeispiel.
- Fig. 6a: zeigt eine perspektivische Ansicht einer Kalkschutzkartusche gemäß einem weiteren Ausführungsbeispiel
- Fig. 6b: zeigt eine Teilschnittansicht des unteren Bereichs eines Speicherbehälters gemäß einem weiteren Ausführungsbeispiel

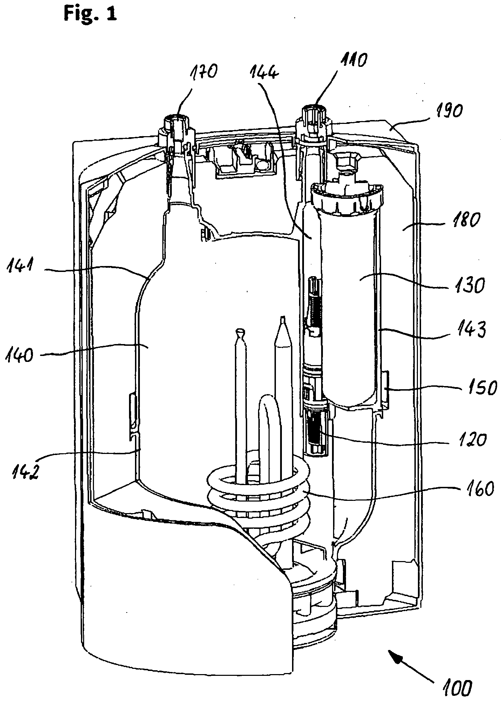

Fig. 1 zeigt eine perspektivische Schnittansicht eines Heißwassergerätes gemäß einem ersten Ausführungsbeispiel. Das Heißwassergerät gemäß dem ersten Ausführungsbeispiel dient vorzugsweise dazu, nahezu kochendes Wasser mit einer Temperatur von mindestens ca. 95°C zur Verfügung zu stellen. Das Heißwassergerät 100 weist einen Kaltwassereinlauf 110, eine Saugeinheit 120, eine Membraneinheit 130, einen Speicherbehälter 140, einen Stützring 150 um den Speicherbehälter herum, eine Heizeinheit 160, einen Heißwasserauslauf 170, eine Wärmedämmung 180 und ein Außengehäuse 190 auf. Der Speicherbehälter 140 kann beispielsweise aus einer oberen und unteren Hälfte 141, 142 bestehen. An den Übergangs- bzw. Schweißstellen zwischen dem oberen und unteren Teil des Speicherbehälters 141, 142 ist der Stützring 150 vorgesehen. Der Stützring 150 soll der Stabilisierung und Stützung der Nahtstellen zwischen dem oberen und unteren Teil des Speicherbehälters dienen. Der Speicherbehälter 140 weist in seinem oberen Teil einen Eingangsabschnitt 144 und einen Aufnahmeraum 143 für Ausdehnungswasser auf. Innerhalb des Speicherbehälters 140 ist die Heizeinheit 160 vorgesehen. Im Eingangsabschnitt 144 des Speicherbehälters 140 wird die Saugeinheit 120 vorgesehen, welche eine Venturidüse aufweisen kann.

Die Heizeinheit 160 wird so gesteuert, dass die Temperatur des sich in dem Speicher befindlichen Wassers im Wesentlichen mindestens ca. 95°C beträgt.

Der Aufnahmeraum 130 ist beispielsweise im oder am oberen Behälterteil 141 vorgesehen und dient als Ausgleichsraum für Ausdehnungswasser. Optional kann eine Membraneinheit 130 in den Aufnahmeraum eingeführt werden. Durch das Vorsehen der Membraneinheit 130 mit einer Membran kann sich das Wasser in den Aufnahmeraum 143 drucklos ausdehnen. Die Saugeinheit 120 dient dazu, den Aufnahmeraum 143 zu entleeren.

Das Material des Speicherbehälters 140 ist Kunststoff, beispielsweise Polyamid oder Polypropylen.

Der Speicherbehälter 140 ist über eine Überströmöffnung mit dem Aufnahmeraum 143 verbunden. Die in den Aufnahmeraum 143 eingeführte Membraneinheit 130 kann optional den Speicherbehälter gegenüber der Umgebung luftdicht abschließen. Der Auslauf (Heißwasserauslauf) 170 ist ventilfrei ausgestaltet, d. h. er weist kein Rückflussverhinderungsventil auf. Somit kann Wasser, welches sich in dem Auslauf bzw. der Armatur nach einem Zapfvorgang befindet, wieder in den Speicherbehälter 140 zurückfließen und kann dort erneut auf die gewünschte Temperatur erwärmt werden. Damit kann verhindert werden, dass Wasser mit einer niedrigen Temperatur aus der Armatur des Heißwassergerätes fließt, bevor das nahezu kochende Wasser mit einer Temperatur von mindestens ca. 95°C herausfließt.

Das Heißwassergerät gemäß der Erfindung wird vorzugsweise mit einer drucklosen Zapfarmatur verbunden. Beim Zapfen strömt dann das Heißwasser aus dem Heißwasserauslauf 170. Parallel dazu strömt Wasser durch die Venturidüse der Saugeinheit 120, welche zunächst Wasser aus dem Aufnahmeraum saugen kann, so dass ein Volumen für das Ausdehnungswasser und ggf. rückfließendes Wasser aus der Armatur und dem Heißwasserauslauf 170 vorgesehen werden kann. Die Membran der Membraneinheit 130 wird bei Zapfende aufgrund des statischen Wasserdruckes zusammengedrückt, so dass das sich in der Armatur, der Verbindungsleitung zur Armatur und in dem Heißwasserauslauf befindliche Wasser zurück in den Speicherbehälter fließt.

Zur Verbesserung der Wärmeeffizienz kann eine Wärmedämmung 180 zwischen dem Außengehäuse 190 und dem Speicherbehälter 140 vorgesehen werden.

Ferner ist es vorteilhaft, wenn das sich in der Armatur, der Verbindungsleitung und dem Heißwasserauslauf 170 befindliche Wasser in den Speicherbehälter zurückfließt, damit die Verbindungsleitung leer ist und bei einer Entgasung kein Wasser aus der Verbindungsleitung heraus gedrückt werden kann. Bei einer starken Entgasung beim Aufheizen des Wassers in dem Speicherbehälter kann es zu aufsteigenden Gasblasen kommen, so dass sich in der Verbindungsleitung und der Armatur befindliches stehendes Wasser aus der Armatur gedrückt werden kann.

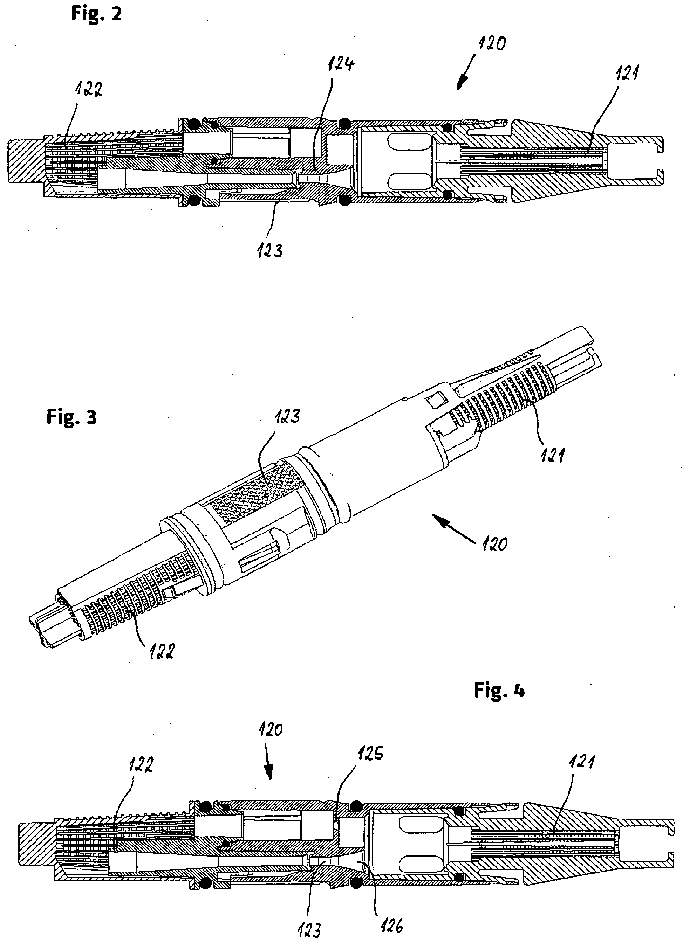

Fig. 2 zeigt eine schematische Schnittansicht einer Venturidüse in einem Heißwassergerät. Die Saugeinheit 120 weist einen ersten, zweiten und dritten Schmutzfilter 121, 122, 123 auf. Hierbei wird der erste und zweite Schmutzfilter 121, 122 jeweils an einem ersten und zweiten Ende der Saugeinheit vorgesehen. Ferner weist die Saugeinheit eine eine Venturidüse 124 auf. Im Bereich der Venturidüse 124 ist der dritte Schmutzfilter 123 vorgesehen. Auf vorteilhafte Art und Weise weist die Saugeinheit 120 keine beweglichen Bauteile auf.

Fig. 3 zeigt eine perspektivische Ansicht auf die Venturidüse von Fig. 2. Die Saugeinheit 120 weist an ihrem ersten Ende einen ersten Schmutzfilter 121 und an ihrem zweiten Ende einen zweiten Schmutzfilter 122 auf. Dazwischen kann ein dritter Schmutzfilter 123 vorgesehen sein.

Fig. 4 zeigt eine perspektivische Ansicht einer Venturidüse gemäß der Erfindung. Die Saugeinheit 120 weist an ihrem ersten Ende einen ersten Schmutzfilter 121 und an ihrem zweiten Ende einen zweiten Schmutzfilter 122 auf. Ferner weist die Saugeinheit eine Venturidüse eine Venturidüse 124 auf. Parallel zu der Venturidüse 124 ist ein Bypass 125 vorgesehen, um den Druckverlust durch die Saugeinheit zu reduzieren. Die Querschnittsfläche der Bypassöffnung 125 ist kleiner als die Querschnittsfläche der Treibdüse 126 der Wasserstrahlpumpe 124.

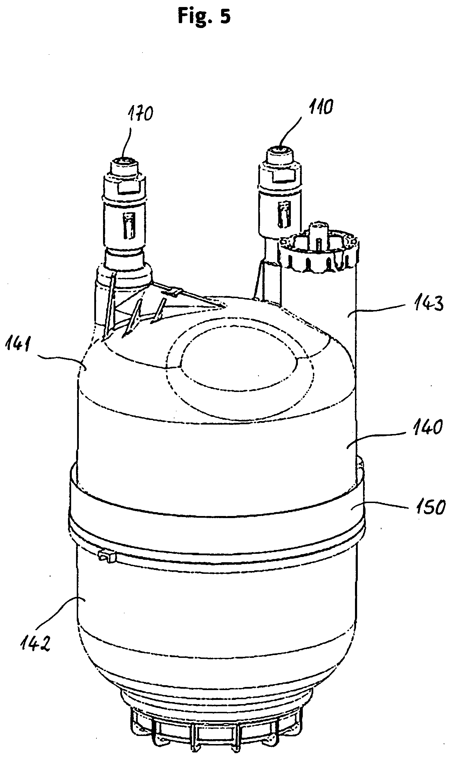

Fig. 5 zeigt eine perspektivische Ansicht eines Speicherbehälters für ein Heißwassergerät gemäß einem zweiten Ausführungsbeispiel. Der Speicherbehälter gemäß dem zweiten Ausführungsbeispiel kann beispielsweise in dem Heißwassergerät gemäß dem ersten Ausführungsbeispiel verwendet werden. Der Speicherbehälter 140 weist eine obere und eine untere Behälterhälfte 141, 142 auf. Am Übergangsbereich zwischen der oberen und unteren Behälterhälfte 141, 142 kann ein Stützring 150 vorgesehen sein. Der Stützring dient dabei dazu, den Übergangsbereich zwischen der oberen und unteren Behälterhälfte zu stützen. Der Speicherbehälter kann beispielsweise aus Polypropylen hergestellt sein. Wenn das Wasser innerhalb des Speicherbehälters auf eine Temperatur von mindestens ca. 95°C aufgewärmt wird, so dass es nahezu kocht, wird sich der Behälter ebenfalls ausdehnen und kann die Ausdehnungen auf die Wärmedämmung 180 weitergeben. Dies kann jedoch zu einer Beschädigung der Wärmedämmung führen. Zur Vermeidung der Beschädigung der Wärmedämmung wird also der Stützring 150 verwendet. Da der Stützring über eine höhere Festigkeit als das Material des Speicherbehälters verfügen muss, kann der Stützring beispielsweise einen mit Glasfaser gefüllten Kunststoff wie beispielsweise Polyamid darstellen. Alternativ dazu kann auch ein Metallring verwendet werden.

Gemäß der Erfindung, ist der Auslauf des Heißwassergerätes ventilfrei ausgestaltet, d. h. es ist z. B. kein Rückflussverhinderungsventil im Bereich des Heißwasserauslaufes 170 vorgesehen. Damit kann sichergestellt werden, dass das sich in dem Auslauf befindliche Wasser wieder zurück in den Speicherbehälter fließen kann.

Das Heißwassergerät gemäß der Erfindung kann vorzugsweise als ein Untertisch-Heißwassergerät oder als Untertisch-Kochendwassergerät ausgestaltet sein. Das Heißwassergerät gemäß der Erfindung ist insbesondere zur Tassenzapfung ausgelegt.

Die Saugpumpe ist ebenfalls ventilfrei bzw. rückflussventilfrei ausgestaltet.

Durch das Vorsehen der Membraneinheit 130 in dem Aufnahmeraum 143 wird gewährleistet, dass sich das Wasser innerhalb des Speicherbehälters ausdehnen kann.

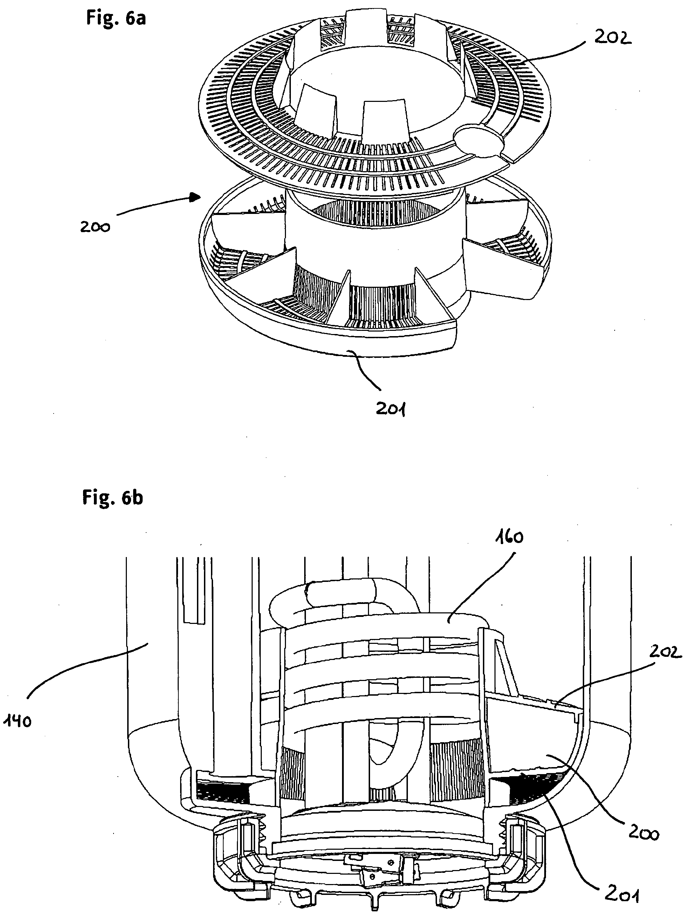

Fig. 6a zeigt eine Kalkschutzkartusche 200 gemäß einem weiteren Ausführungsbeispiel. Hierbei weist die Kalkschutzkartusche 200 einen unteren Behälter 201 sowie einen Deckel 202 auf. Sowohl Deckel 201 als auch Behälter 202 ist als Sieb mit einer Schlitzbreite von vorzugsweise 0.3 mm ausgeführt. Das Volumen der Kalkschutzkartusche beträgt vorzugsweise 200 ml. Die mit Katalysatorgranulat gefüllte Kalkschutzkartusche 200 wird vorzugsweise auf dem Boden des Speicherbehälters 140 konzentrisch zum Heizkörper 160 angeordnet. Der Behälter 201 und der Deckel 202 der Kalkschutzkartusche 200 können verschweißt werden. Durch die Ausgestaltung der Kartusche 200 als Sieb wird das Granulat vom einströmenden Kaltwasser und von der Konvektionsströmung während des Aufheizens wirksam umspült.

Fig. 6b zeigt eine Teilschnittansicht des unteren Bereichs des Speicherbehälters 140 mit einer Kalkschutzkartusche 200 mit einem Behälter 201 und einem Deckel 202.

## Patentansprüche

1. Heißwassergerät, mit
einem Speicherbehälter (140) mit einem Kaltwassereinlauf (110), einem Heißwasserauslauf (170) und einem Aufnahmeraum (143) für Ausdehnungswasser,
wobei der Heißwasserauslauf (170) offen und ventilfrei ausgestaltet ist, zur Beaufschlagung von Heißwasser mit einem atmosphärischem Luftdruck für eine Bereitstellung von nahezu kochendem Heißwasser mit einer Temperatur von mindestens ca. 95°C,
mit einer Saugeinheit (120) in einem Einlauf (144) des Speicherbehälters (140) zum Ansaugen von Ausdehnungswasser aus dem Aufnahmeraum (143) mit einer Temperatur von mindestens ca. 95°C,
wobei die Saugeinheit (120) ein druckverminderndes Element (124) und einen parallel dazu ausgestalteten Bypass (125) aufweist,
wobei der Speicherbehälter (140) aus Kunststoff ist, wobei der Aufnahmeraum (143) und der Einlauf (144) in einem oberen Teil des Behälters (140) angeordnet sind, **dadurch gekennzeichnet, dass** das druckvermindernde Element eine Venturidüse (124) ist und dass der Querschnitt des Bypasses (125) kleiner ist als der Querschnitt einer Treibdüse (126) der Venturidüse (124).

2. Heißwassergerät nach Anspruch 1,
wobei das nahezu kochende Heißwasser eine Temperatur von ca. 96°C, 97°C, 98°C oder 99°C aufweist, insbesondere auf eine solche Temperatur geregelt wird, vorzugsweise vom atmosphärischen Druck.

3. Heißwassergerät nach Anspruch 1 oder 2, ferner mit
einer Membraneinheit (130) mit einer Membran, welche in dem Aufnahmeraum (143) vorgesehen ist und dazu dient, einen Druckausgleich zu schaffen und den Speicherbehälter (140) nach außen gegen einen Lufteintritt abzudichten.

4. Heißwassergerät nach einem der Ansprüche 1 bis 3, wobei
das Heißwassergerät drucklos ausgestaltet ist.

5. Heißwassergerät nach einem der Ansprüche 1 bis 4, mit
einer Kalkschutzkartusche (200), welche im unteren Bereich des Speicherbehälters (140) angeordnet ist, wobei die Kalkschutzkartusche (200) einen Behälter (201) zur Aufnahme von Katalysatorgranulat und einen entsprechenden Deckel (202) aufweist, wobei der Behälter (201) und der Deckel (202) jeweils als Sieb ausgestaltet sind.

6. Heißwassergerät nach einem der Ansprüche 1 bis 5, wobei
eine Armatur an dem Kaltwassereinlauf (110) und dem Heißwasserauslauf (170) befestigbar ist, wobei ein Kaltwasserventil in einem Kaltwassereinlauf dieser Armatur angeordnet ist zur Bereitstellung von nahezu kochendem Wasser durch Öffnen des Kaltwasserventils.

7. Heißwassergerät nach Anspruch 6, wobei
ein Auslaufpunkt für das nahezu kochende Wasser am höchsten Punkt eines Heißwasserkanals der Armatur angeordnet ist.

8. Heißwassergerät nach Anspruch 6 oder 7, wobei
die Armatur dazu geeignet ist, dem ausströmenden nahezu kochenden Heißwasser Kaltwasser beizumischen.

9. Heißwassergerät nach einem der Ansprüche 1 bis 8, wobei
der Speicherbehälter (140) zwei Behälterhälften (141, 142) aufweist,
wobei das Heißwassergerät einen Stützring (150) aufweist, der im Übergangsbereich zwischen der ersten und zweiten Behälterhälfte (141, 142) vorgesehen ist.

10. Verfahren zum Betreiben eines Heißwassergeräts nach einem der Ansprüche 1 bis 9, mit den Schritten:
Fließen von Ausdehnungswasser beim Aufheizen des Heißwassergeräts in einen Aufnahmeraum (143) für Ausdehnungswasser,
Erhitzen des Heißwassers bei einem atmosphärischen Luftdruck auf eine Temperatur von mindestens ca. 95°C, bei der es wenigstens nahezu kocht, Liefern von nahezu kochendem Wasser durch einen offenen und ventilfreien Heißwarserauslauf (170) durch Öffnen eines Kaltwasserventils , wodurch das Heißwasser aus dem Speicherbehälter strömt, so dass durch Öffnen des Kaltwasserventils nahezu kochendes Wasser bereitgestellt wird.

## Claims

1. Hot water unit, with
a storage container (140) with a cold water entry (110), a hot water runout (170) and a reception space (143) for expansion water, where the hot water runout is open and valve-free (170), designed for the subjection of hot water to atmospheric air pressure for an appropriation of almost boiling hot water with a temperature of at least approx. 95°C,
with a suction unit (120) in an entry (144) of the storage container (140) for the suction of expansion water from the reception space (143) with a temperature of at least approx. 95°C,
where the suction unit (120) indicates a pressure decreasing element (124) and a bypass (125) designed in parallel to this,
where the storage container (140) is of plastic where the reception space (143) and the feed (144) are arranged in an upper part of the container (140), identified by the pressure decreasing element being a Venturi nozzle (124) and the cross-section of the bypasses (125) being smaller than the cross-section of a propellant nozzle (126) of the Venturi nozzle (124).

2. Hot water unit according to Claim 1,
where the almost boiling hot water indicates a temperature of approx. 96°C, 97°C, 98°C or 99°C, in particular controlled to such a temperature, preferably of atmospheric pressure.

3. Hot water unit according to Claim 1 or 2, further with
a diaphragm unit (130) with a membrane which is provided in the reception space (143) and serves to create a pressure compensation and to seal off the storage container (140) externally against any air inlet.

4. Hot water unit according to one of the Claims 1 to 3, where
the hot water unit is designed pressure-free.

5. Hot water unit according to one of the Claims 1 to 4, with
a lime-protection cartridge (200) which is arranged in the lower area of the storage container (140), where the lime-protection cartridge (200) indicates a container (201) for the reception of catalyzer granulate and a corresponding cover (202), where the container (201) and the cover (202) are designed as a screen in each case

6. Hot water unit according to one of the Claims of 1 to 5, where
a valve can be fastened at the cold water entry (110) and the hot water runout (170), where a cold water valve is arranged in a cold water entry of this valve for the appropriation of almost boiling water through opening the cold water valve.

7. Hot water unit according to Claim 6, where
a run-out point for the almost boiling water is arranged at the highest point of a hot water conduit of the valve.

8. Hot water unit according to Claim 6 or 7, where
the valve is suitable for the purpose of adding almost boiling cold water to the outflowing hot water.

9. Hot water unit according to one of the Claims 1 to 8, where
the storage container (140) indicates two container halves (141, 142),
where the hot water unit indicates a bearing ring (150) which is provided in the transition region between the first and second container half (141, 142).

10. Process for the operation of a hot water unit according to one of the Claims 1 to 9:
Flowing of expansion water into a reception space (143) for expansion water during warming of the hot water unit,
heating of the hot water at atmospheric air pressure to a temperature of at least approx. 95°C, where it at least almost boils,
supply of almost boiling water through an open and valve-free hot water runout (170) by opening a cold water valve through which the hot water flows from the storage container, so that almost boiling water is provided by opening the cold water valve.

## Revendications

1. Dispositif d'eau chaude, comprenant
un réservoir de stockage (140) équipé d'une entrée d'eau froide (110), d'une sortie d'eau chaude (170) et d'un espace de réception (143) pour l'eau d'expansion,
la sortie d'eau chaude (170) étant ouverte et sans valve et destinée à la mise en pression d'eau chaude à l'aide d'une pression atmosphérique pour la mise à disposition d'eau chaude quasi bouillante d'une température d'au moins 95 °C environ,
équipé d'une unité aspirante (120) dans une entrée (144) du réservoir de stockage (140) destinée à l'aspiration de l'eau d'aspiration provenant de l'espace de réception (143) d'une température d'au moins 95 °C environ,
l'unité aspirante (120) présentant un élément réducteur de pression (124) et un bypass (125) disposé parallèlement à ce dernier,
le réservoir de stockage (140) étant en plastique, l'espace de réception (143) et l'entrée (144) étant disposés dans une partie supérieure du réservoir (140), **caractérisé en ce que** l'élément réducteur de pression est une buse Venturi (124) et **en ce que** la section du bypass (125) est inférieure à la section d'une buse de propulsion (126) de la buse Venturi (124).

2. Dispositif d'eau chaude selon la revendication 1,
**caractérisé en ce que** l'eau chaude quasi bouillante présente une température de 96 °C, 97 °C, 98 °C ou 99°C environ, est réglée en particulier à une telle température, de préférence par la pression atmosphérique.

3. Dispositif d'eau chaude selon la revendication 1 ou 2, équipé en outre
d'une unité de membrane (130) pourvue d'une membrane prévue dans l'espace de réception (143) et servant à créer une compensation de pression et à rendre étanche vers l'extérieur le réservoir de stockage (140) contre une entrée d'air.

4. Dispositif d'eau chaude selon l'une des revendications 1 à 3, **caractérisé en ce que** le dispositif d'eau chaude est initialement dépourvu de pression.

5. Dispositif d'eau chaude selon l'une des revendications 1 à 4, comprenant
une cartouche anticalcaire (200) disposée dans la zone inférieure du réservoir de stockage (140), la cartouche anticalcaire (200) présentant un réservoir (201) destiné à accueillir du granulat de catalyseur et un couvercle (202) adapté, le réservoir (201) et le couvercle (202) faisant respectivement office de tamis.

6. Dispositif d'eau chaude selon l'une des revendications 1 à 5, **caractérisé en ce que**
une robinetterie peut être fixée à l'entrée d'eau froide (110) et à la sortie d'eau chaude (170), une soupape d'eau froide étant disposée dans une entrée d'eau froide de cette robinetterie pour la mise à disposition d'eau chaude quasi bouillante lorsque la soupape d'eau froide est ouverte.

7. Dispositif d'eau chaude selon la revendication 6, **caractérisé en ce que**
un point de sortie pour l'eau quasi bouillante est disposé au niveau du point le plus élevé d'un canal d'eau chaude de la robinetterie.

8. Dispositif d'eau chaude selon la revendication 6 ou 7, **caractérisé en ce que**
la robinetterie est propre à mélanger de l'eau froide à l'eau chaude quasi bouillante en circulation.

9. Dispositif d'eau chaude selon l'une des revendications 1 à 8, **caractérisé en ce que** le réservoir de stockage (140) présente deux moitiés de réservoir (141, 142),
le dispositif d'eau chaude présentant une bague d'appui (150) prévue dans la zone de transition entre la première et la seconde moitié du réservoir (141, 142).

10. Procédé de fonctionnement d'un dispositif d'eau chaude selon l'une des revendications 1 à 9, avec comme étapes :
écoulement d'eau d'expansion lors du chauffage du dispositif d'eau chaude dans un espace de réception (143) pour l'eau d'expansion,
l'eau chaude est chauffée sous une pression atmosphérique à une température d'au moins 95°C environ à laquelle elle bout, au moins quasiment,
distribution d'eau quasi bouillante par une sortie d'eau chaude (170) ouverte et sans valve en ouvrant une soupape d'eau froide à travers laquelle l'eau chaude s'écoule depuis le réservoir de stockage, de sorte que de l'eau quasi bouillante est mise à disposition grâce à l'ouverture de la soupape d'eau froide.
